Europäisches Patentamt

European Patent Office

Office européen des brevets

(19)

(11) Numéro de publication : **0 130 100 B1**

(12) **FASCICULE DE BREVET EUROPÉEN**

(45) Date de publication du fascicule du brevet :
09.09.87

(51) Int. Cl.⁴ : **B 23 K 26/08**

(21) Numéro de dépôt : **84401119.7**

(22) Date de dépôt : **30.05.84**

(54) **Procédé de soudage par point à faisceau laser.**

(30) Priorité : 24.06.83 FR 8310531

(43) Date de publication de la demande :
02.01.85 Bulletin 85/01

(45) Mention de la délivrance du brevet :
09.09.87 Bulletin 87/37

(84) Etats contractants désignés :
**DE GB IT SE**

(56) Documents cités :
**FR-A- 1 564 933**
**FR-A- 2 342 135**
**GB-A- 1 215 714**
**US-A- 4 330 699**
**PATENTS ABSTRACTS OF JAPAN, vol. 7, no. 163 (M-229)(1308), 16 juillet 1983**

(73) Titulaire : **SCIAKY S.A. Société dite:**
**119 quai Jules Guesde**
**F-94400 Vitry sur Seine (Val de Marne) (FR)**

(72) Inventeur : **Sciaky, Mario**
**46 rue Fabert**
**Paris (FR)**
Inventeur : **Cazes, Roland**
**6 rue Marinville**
**Saint Maur (Val de Marne) (FR)**
Inventeur : **Sayegh, Georges**
**41 rue de Gergovie**
**Pairs (FR)**

(74) Mandataire : **Cabinet Pierre HERRBURGER**
**115, Boulevard Haussmann**
**F-75008 Paris (FR)**

## Description

L'invention concerne un procédé et une installation de soudage par point à faisceau laser.

La construction de produits manufacturés en tôles minces comporte souvent des assemblages et des soudures par recouvrement, donnant lieu à des méthodes de fabrication simples. C'est le cas des carrosseries automobiles, des appareils électroménagers, des meubles métalliques, etc...

La soudure par recouvrement comporte, par rapport à la soudure bord à bord, des avantages importants, en particulier du fait que la précision d'accostage des bords à souder entre eux et la précision par rapport au joint de l'outil de soudage n'interviennent plus. De plus, une liaison par points discontinus est suffisante pour obtenir un assemblage satisfaisant lorsque l'appareil fabriqué n'est pas un réservoir ; ce qui est souvent le cas.

Pour réaliser de tels assemblages, on a recours principalement au procédé de soudage par résistance qui permet d'obtenir des soudures circulaires dont le diamètre est égal à 5 $\sqrt{e}$, e étant l'épaisseur de la tôle la plus mince.

On a également utilisé le procédé de soudage sous gaz avec électrode de tungstène qui présente, par rapport au soudage par résistance, l'avantage de nécessiter des intensités très faibles et, par suite, des conducteurs électriques d'alimentation de l'outil de soudage beaucoup moins encombrants. Mais ce procédé n'a pas d'effet de pénétration et se trouve limité aux tôles d'épaisseurs 0,5 à 0,8 mm tout au plus.

La mise en œuvre d'un rayon laser permet d'obtenir une fusion ponctuelle sans limitation d'épaisseur dans un domaine très large de tôles dites minces que l'on rencontre dans les fabrications citées plus haut, grâce à son effet de pénétration que lui procure sa densité de puissance élevée au point de focalisation.

Il est connu qu'une telle soudure est très étroite, ce qui est intéressant dans de nombreuses applications, mais est un inconvénient dans le cas d'un assemblage par superposition.

Ainsi, dans le cas où l'on désire réaliser une ligne de soudure de deux pièces placées bord à bord, à l'aide d'un faisceau laser, il est connu d'entraîner en vibrations le moyen de focalisation du faisceau afin que son point de focalisation sur les pièces se déplace à grande vitesse transversalement à la ligne de soudure simultanément au déplacement relatif des pièces et de la tête le long de la ligne de soudage à réaliser. Dans ce cas, le balayage transversal à haute fréquence du faisceau de part et d'autre de la ligne de soudage, a pour effet d'établir simultanément la fusion du métal des deux pièces à assembler sur toute la largeur balayée, ce qui est considéré dans ce cas, comme acceptable techniquement.

Dans le cas où l'on désire réaliser un assemblage par soudure par point de deux pièces superposées, il est possible évidemment de remédier à la faible surface de chaque point de soudure réalisé par faisceau laser focalisé en multipliant le nombre de telles soudures mais, dans de nombreux cas, cela n'est valable ni techniquement, ni économiquement.

Un autre procédé connu, décrit par exemple dans la demande de brevet japonais N° 58-568492, prévoit de réaliser une soudure par points de deux pièces superposées en entraînant le faisceau laser suivant une trajectoire circulaire.

Suivant cette disposition, la solidité de l'assemblage est bien entendu fonction de la longueur de cette ligne circulaire, c'est-à-dire de son diamètre mais, en réalité, cette solidité n'est pas supérieure à celle obtenue par une trajectoire rectiligne. Par ailleurs, dans bien des cas, la longueur de la trajectoire circulaire, c'est-à-dire son diamètre, qui devrait être prévue pour obtenir une solidité d'assemblage déterminée, est trop importante pour être envisagée car la surface de ces pièces, disponible pour l'assemblage, est insuffisante.

La présente invention a notamment pour but de remédier à ces inconvénients et concerne à cet effet un procédé de soudage par point à faisceau laser, consistant à focaliser, à l'aide d'un moyen de focalisation, un faisceau laser issu d'un générateur de faisceau laser sur les pièces superposées à souder par point, et on entraîne ce point de focalisation en déplacement suivant une trajectoire qui se referme sur elle-même de façon à établir une ligne de soudure continue, procédé caractérisé en ce qu'on déplace le moyen de focalisation à une vitesse déterminée en fonction de la puissance du faisceau et de l'épaisseur de ces pièces, de façon que par effet thermique cumulé on assure la fusion et le soudage de la totalité de la surface de contact de ces pièces incluse dans cette ligne de soudure qui se referme sur elle-même.

L'invention est représentée, à titre d'exemples non limitatifs, sur les dessins ci-joints, dans lesquels :

la figure 1 est une vue latérale schématique d'un premier mode de réalisation de l'invention,

la figure 2 est une vue latérale d'un autre mode de réalisation de l'invention,

les figures 3 et 4 sont deux graphiques illustrant l'évolution de la puissance du faisceau laser focalisé au cours d'un cycle de soudage.

La présente invention a pour but de procurer un moyen pour obtenir rapidement, avec un faisceau laser focalisé, une soudure traversante d'une surface supérieure à celle normalement obtenue avec un faisceau focalisé maintenu fixe et satisfaisant les conditions techniques de la construction envisagée concernant notamment la solidité de l'assemblage et l'aspect extérieur de la zone assemblée, sans que cette soudure réalisée entre les deux pièces superposées, ne risque de percer les pièces.

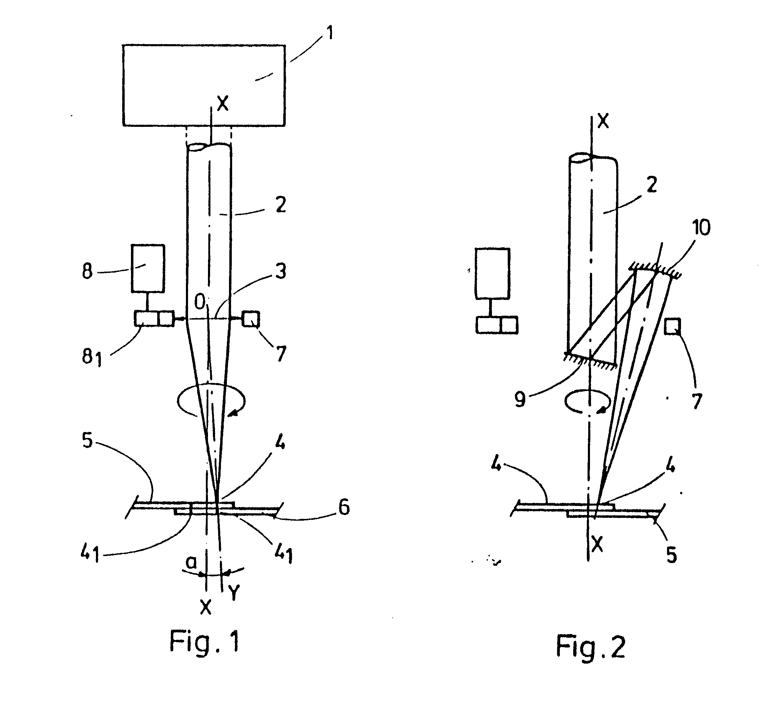

Dans l'exemple de réalisation de la figure 1, l'installation se compose d'un générateur de faisceaux laser 1 qui produit un faisceau laser 2 amené sur un moyen de focalisation 3, constitué par exemple par une lentille, qui assure la focalisation de ce faisceau 2 en un point 4 situé sur les pièces 5 et 6 superposées que l'on désire souder par point.

Conformément à l'invention, le moyen de focalisation 3 est placé sur un support 7 susceptible d'être entraîné en rotation à partir d'un moteur électrique 8 par l'intermédiaire d'un pignon $8_1$ monté sur l'arbre de sortie de ce moteur et engrènant avec une couronne dentée extérieurement prévue sur le support 7.

La lentille de focalisation 3 est fixée sur le support 7 de manière telle que son axe optique O-Y fasse un angle a avec l'axe de rotation X-X du support 7 qui est confondu avec l'axe du faisceau laser 2.

Ainsi, lors de la rotation du support 7, le point de focalisation 4 du faisceau sur les pièces superposées 5, 6 décrit une ligne circulaire fermée d'axe X-X et de façon que, compte tenu de la puissance du faisceau focalisé mis en œuvre, et de sa vitesse de déplacement, on obtienne successivement la fusion du métal des deux pièces et leur soudage, le long de cette ligne circulaire $4_1$, l'effet thermique cumulé de cette opération assurant la propagation de cette fusion et de ce soudage sur tout ou partie de la zone interne à cette ligne circulaire qui n'est pas frappée par le faisceau laser focalisé et qui permet donc d'éviter le perçage des pièces superposées.

Une soudure par point de surface suffisante pourra ainsi être obtenue à l'aide d'une seule rotation du moyen de focalisation 3 en adaptant, bien entendu, la vitesse de rotation à la puissance du faisceau laser focalisé et à l'épaisseur des pièces superposées à souder.

Dans la pratique cependant, il sera préférable de poursuivre la rotation du faisceau laser focalisé au-delà de cette rotation unique, sur une fraction de tour, afin d'assurer le recouvrement des extrémités soudées de la ligne circulaire.

Dans l'exemple de réalisation de la fig. 2, le faisceau laser 2 est amené sur un moyen de focalisation qui se compose d'un miroir plan 9 et d'un miroir concave 10 positionné sur le moyen de support 7.

Dans ce cas, le faisceau laser 2 réfléchi par le miroir plan 9 est renvoyé sur le miroir concave 10 qui assure la focalisation du faisceau au point 4 situé sur les pièces 4, 5 superposées.

Dans ce cas également, le décalage sur les pièces 4 et 5, de l'axe X-X et du point de focalisation 4 détermine approximativement le rayon de la surface du point de soudage réalisé, la rotation de l'ensemble 7, 9, 10 amenant le point de focalisation 4 à décrire un cercle sur les pièces soudées.

Conformément à l'invention, on pourra obtenir une meilleure régularité de fusion et, donc, une meilleure qualité de soudage en modulant la puissance du faisceau laser au cours de la rotation du dispositif de focalisation.

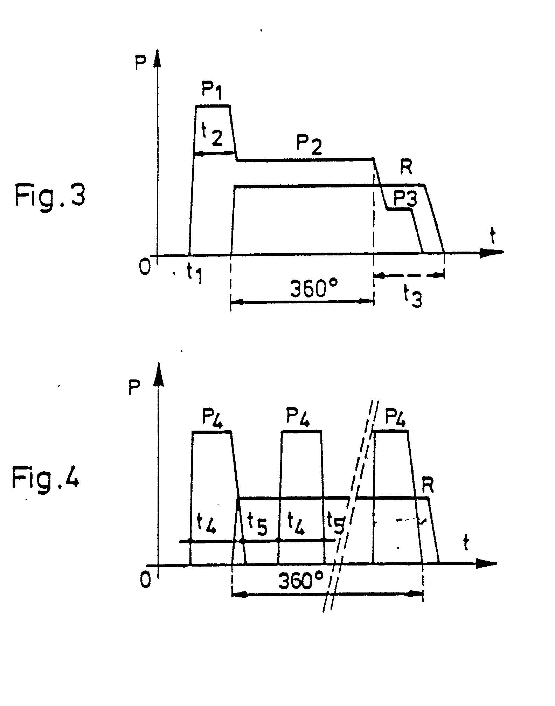

Ainsi, suivant l'exemple du graphique de la fig. 3 qui représente l'évolution de la puissance P du faisceau laser focalisé en fonction du temps et en relation avec la rotation R du moyen de focalisation, on constate que, lorsque le dispositif de focalisation est mis en position par rapport aux tôles (instant $t_1$), on envoie le faisceau laser à une puissance $P_1$ qui dépend essentiellement de l'épaisseur des pièces à souder et cela pendant une durée $t_2$ au cours de laquelle le dispositif de rotation n'est pas mis en œuvre.

Ensuite, le dispositif de rotation est mis en fonctionnement, à vitesse constante, tandis que la puissance du faisceau laser est établie à un niveau $P_2$ inférieur à $P_1$.

Lorsque l'on a obtenu une rotation complète du faisceau laser, la rotation est maintenue pendant une fraction de tour (instant $t_3$) pendant laquelle la puissance du faisceau est réglée à un troisième niveau $P_3$ inférieur à $P_2$.

Par la mise en œuvre de l'invention, il est ainsi possible d'obtenir une fusion sur un point de 5 mm de diamètre entre deux tôles superposées de 1 mm d'épaisseur avec des puissances de l'ordre de 2 kilowatts pour $P_1$ et un temps opératoire n'excédant pas 1 seconde, le diamètre de rotation du point de focalisation étant de l'ordre de 2 à 3 mm.

Suivant l'invention, il est également possible d'obtenir une soudure par point par la juxtaposition de points de fusion successifs formés le long de la ligne circulaire de déplacement du point de focalisation.

Dans ce cas, le cycle préféré est le suivant (voir fig. 4) : la puissance du faisceau laser est réglée à une puissance $P_4$ constante et on envoie le faisceau laser focalisé sur les pièces pendant un temps $t_4$ suffisant pour produire la fusion des deux pièces superposées à hauteur du point d'impact du faisceau laser focalisé. Ensuite, on commande la mise en rotation R du moyen de focalisation, tandis qu'on interrompt le faisceau à intervalles réguliers pendant des durées $t_5$ par exemple équivalentes à $t_4$ jusqu'à ce que le faisceau focalisé décrive un cercle complet.

## Revendications

1. Procédé de soudage par point à faisceau laser, consistant à focaliser, à l'aide d'un moyen de focalisation (3), un faisceau laser (2) issu d'un générateur de faisceau laser (1) sur les pièces superposées (4, 5) à souder par point, et on entraîne ce point de focalisation en déplacement suivant une trajectoire qui se referme sur elle-même de façon à établir une ligne de soudure continue, procédé caractérisé en ce qu'on déplace le moyen de focalisation (3) à une vitesse déterminée en fonction de la puissance du faisceau et de l'épaisseur de ces pièces, de façon que par effet thermique cumulé on assure la fusion et le soudage de la totalité de la surface de contact de ces pièces incluse dans cette ligne de soudure qui se referme sur elle-même.

2. Procédé conforme à la revendication 1, caractérisé en ce qu'on détermine la vitesse de déplacement du moyen de focalisation (3) et donc du point de focalisation (4) de manière telle que, compte tenu de la puissance du faisceau focalisé, on réalise progressivement la fusion des pièces superposées à souder le long de la trajectoire $(4_1)$ décrite par le point de focalisation (4) afin d'obtenir une soudure par point au cours d'une seule révolution du moyen de focalisation.

3. Procédé conforme à l'une quelconque des revendications précédentes, caractérisé en ce qu'on module le faisceau laser de manière telle qu'il présente une première puissance $(P_2)$ au début de l'opération, au cours de laquelle le moyen de focalisation n'est pas déplacé, puis on déplace le moyen de focalisation alors que le faisceau présente une puissance $(P_2)$ inférieure à $(P_1)$ et enfin lorsque le faisceau laser a décrit sa trajectoire, le déplacement du moyen de focalisation est maintenu pendant une fraction de trajectoire tandis que la puissance est réglée à une troisième valeur $(P_3)$ inférieure à $(P_2)$.

4. Procédé conforme à la revendication 1, caractérisé en ce que la modulation de la puissance du faisceau laser est réalisée de façon à évoluer en créneau afin d'obtenir une juxtaposition de points de fusion formés successivement suivant la trajectoire du point de focalisation.

## Claims

1. A spot welding process using a laser beam, which process consists of focussing a laser beam (2), which is produced by a laser beam generator (1), by way of a focussing means (3) onto superimposed parts (4, 5) to be spot welded, said point of focus being moved along a path which joins up with itself in such a way as to form a continuous welding line, which process is characterised in that the focussing means (3) is displaced at a speed which is determined as a function of the power of the beam and of the thickness of said parts, such that the cumulated thermal effect ensures the fusion and welding of the entire contact surface of said parts enclosed in said welding line which joins up with itself.

2. A process as claimed in claim 1, characterised in that the speed of displacement of the focussing means (3), and hence of the point of focus (4), is determined in such a way that, taking into account the power of the focussed beam, the superimposed parts to be welded are progressively fused along the path $(4_1)$ described by the point of focus (4) in order to obtain a spot weld in one revolution of the focussing means.

3. A process as claimed in claim 1 or claim 2, characterised in that the laser beam is modulated in such a way that it has a first power $(P_1)$ on commencement of the operation, in the course of which the focussing means is not displaced, then the focussing means is displaced when the beam has a power $(P_2)$ which is less than $(P_1)$, and

finally, when the laser beam has described its path, displacement of the focussing means is continued for a fraction of the path while the power is adjusted to a third value $(P_3)$ which is less than $(P_2)$.

4. A process as claimed in claim 1, characterised in that modulation of the power of the laser beam is effected in such a way as to develop in crenellated form in order to achieve a juxtaposition of the points of fusion formed successively along the path of the point of focus.

## Patentansprüche

1. Verfahren zum Laserstrahl-Punktschweißen, beruhend auf dem Bündeln eines aus einem Laserstrahl-Generator (1) hervorgegangenen Laserstrahls (2) mit Hilfe eines Bündelungsmittels (3) auf die zum Punktschweißen übereinandergelagerten Stücke (4, 5), wobei man den Bündelungspunkt durch Verschiebung längs einer Bahn verlegt, die in sich selbst dergestalt zurückläuft, daß eine kontinuierliche Schweißlinie gebildet wird, dadurch gekennzeichnet, daß man das Bündelungsmittel (3) mit einer in Abhängigkeit von der Stärke des Strahls und der Dicke der Stücke bestimmten Geschwindigkeit dergestalt verschiebt, daß man durch den kumulierten thermischen Effekt das Schmelzen und das Verschweißen der Gesamtheit der von dieser in sich selbst zurücklaufenden Schweißlinie eingeschlossenen Kontaktfläche dieser Stücke sicherstellt.

2. Verfahren nach Anspruch 1, dadurch gekennzeichnet, daß man die Verschiebungsgeschwindigkeit des Bündelungsmittels (3) und somit des Bündelungspunktes (4) in der Weise bestimmt, daß man unter Berücksichtigung der Stärke des gebündelten Strahls das Schmelzen der übereinanderliegend zu verschweißenden Stücke längs der vom Bündelungspunkt (4) beschriebenen Bahn $(4_1)$ fortschreitend realisiert, um eine Punktschweißung während einer einzigen Umdrehung des Bündelungsmittels zu erhalten.

3. Verfahren gemäß einem der vorangehenden Ansprüche, dadurch gekennzeichnet, daß man den Laserstrahl in der Weise moduliert, daß er eine erste Stärke $(P_1)$ aufweist zu Beginn des Vorgangs, in dessen Verlauf das Bündelungsmittel nicht verschoben wird, man darauf das Bündelungsmittel verschiebt, während der Strahl eine Kraft $(P_2)$, geringer als $(P_1)$, aufweist und schließlich, nachdem der Laserstrahl seine Bahn beschrieben hat, die Verschiebung des Bündelungsmittels während eines Teils der Bahn beibehalten wird, während die Stärke auf einen dritten Wert $(P_3)$ geringer als $(P_2)$ geregelt ist.

4. Verfahren gemäß Anspruch 1, dadurch gekennzeichnet, daß die Modulierung der Stärke des Laserstrahls in der Weise realisiert wird, daß sich Zinnen entwickeln, um ein Nebeneinanderliegen der nacheinander längs der Bahn des Bündelungspunkts gebildeten Verschmelzungspunkte zu erhalten.

Fig. 2

Fig. 1

Fig. 3

Fig. 4